# EUROPEAN PATENT APPLICATION

(11) **EP 2 582 121 A2**
(43) Date of publication of application: **17.04.2013**
(21) Application number: 12187968.8
(22) Date of filing: 10.10.2012
(51) Int. Cl.: H04M 1/725

(54) **Method and apparatus for generating user configurable user interface in a portable terminal**

(30) Priority: 11.10.2011 KR 20110103487
(71) Applicant: Samsung Electronics Co., Ltd, Gyeonggi-do 443-742 (KR)
(72) Inventor: Im, Ho-Young, Seoul (KR); Lee, Jeong-Heum, Gyeonggi-do (KR); Lee, So-Young, Gyeonggi-do (KR)
(74) Representative: Harrison Goddard Foote

(57) **Abstract**

User interface configuration is provided. A method for configuring a user interface in a portable terminal includes outputting selectable user modes, receiving a selected user mode from a user, and setting the user mode selected by the user to the user interface.

## Description

### TECHNICAL FIELD

The present disclosure relates generally to user-configurable user interface generation. More particularly, the present disclosure relates to a method and an apparatus for allowing a user to handle a user interface of a portable terminal for user convenience.

### BACKGROUND

Mostly, a user interface of a portable terminal is determined in advance in the phase of manufacture and it is hard for a user to arbitrarily modify the user interface.

This implies that it takes some time for the user to accustom to the configured user interface, which causes inconvenience to the user in using the portable terminal.

While recent smart phones are devised for the comfortable living, their complicated manipulation and usage make elderly users or people who lack knowledge of the smart phone feel uncomfortable with the smart phone.

### SUMMARY

To address the above-discussed problems, it is a primary aspect of the present disclosure to provide a method and an apparatus for generating a user-configurable user interface in a portable terminal.

Another aspect of the present disclosure is to provide a method and an apparatus for configuring a user interface for user's convenience in a portable terminal.

Yet another aspect of the present disclosure is to provide a method and an apparatus for generating a user interface to provide user convenience to elderly silver generation having no special knowledge about a portable terminal and to provide a protection function for young children.

Herein, the portable phone embraces a smart phone.

According to one aspect of the present disclosure, a method for configuring a user interface in a portable terminal includes outputting selectable user modes; receiving a selected user mode from a user; and setting the user mode selected by the user to the user interface.

According to another aspect of the present disclosure, an apparatus of a portable terminal for configuring a user interface includes a modem for communicating with a base station; a controller for outputting selectable user modes, receiving a user mode from a user, and setting the user mode selected by the user to the user interface; an input part for providing input data of the user to the controller; and a display part for displaying output data of the controller.

According to yet another aspect of the present disclosure, a method of a communication company server for configuring a user interface in a mobile communication system includes determining whether a user interface configuration value request is received from a portable terminal; when receiving the user interface configuration value request, determining whether a user interface configuration criterion is an age; and when the user interface configuration criterion is the age, determining and transmitting a user interface configuration value for the age of a user, to the portable terminal.

According to still another aspect of the present disclosure, an apparatus of a communication company server for configuring a user interface of the communication company server in a mobile communication system includes a modem for communicating with other node; and a controller for determining whether a user interface configuration value request is received from a portable terminal, determining whether a user interface configuration criterion is an age when receiving the user interface configuration value request, and when the user interface configuration criterion is the age, determining and transmitting a user interface configuration value for the age of a user, to the portable terminal.

Other aspects, advantages, and salient features of the subject matter of the present disclosure will become apparent to those skilled in the art from the following detailed description, which, taken in conjunction with the annexed drawings, discloses exemplary embodiments.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

The above and other aspects, features, and advantages of certain exemplary embodiments of the present disclosure will be more apparent from the following description taken in conjunction with the accompanying drawings, in which:

FIGURES 1A and 1B are simplified diagrams of a user interface configuration screen according to an exemplary embodiment of the present disclosure;

FIGURE 2 is a flowchart of a method for configuring a user interface of a portable terminal according to an exemplary embodiment of the present disclosure;

FIGURE 3 is a diagram of the user interface configuration using a computer according to an exemplary embodiment of the present disclosure;

FIGURE 4 is a flowchart of operations of the computer in the user interface configuration using the computer according to an exemplary embodiment of the present disclosure;

FIGURE 5 is a flowchart of operations of the portable terminal in the user interface configuration using the computer according to an exemplary embodiment of the present disclosure;

FIGURE 6 is a diagram of the user interface configuration using a communication company according to an exemplary embodiment of the present disclosure;

FIGURE 7 is a flowchart of operations of the portable terminal in the user interface configuration using the communication company according to an exemplary embodiment of the present disclosure;

FIGURE 8 is a flowchart of operations of a communication service provider server in the user interface configuration using the communication service provider according to an exemplary embodiment of the present disclosure;

FIGURE 9 is a block diagram of the portable terminal according to an exemplary embodiment of the present disclosure; and

FIGURE 10 is a block diagram of the communication service provider server according to an exemplary embodiment of the present disclosure.

Throughout the drawings, like reference numerals will be understood to refer to like parts, components and structures.

### DETAILED DESCRIPTION

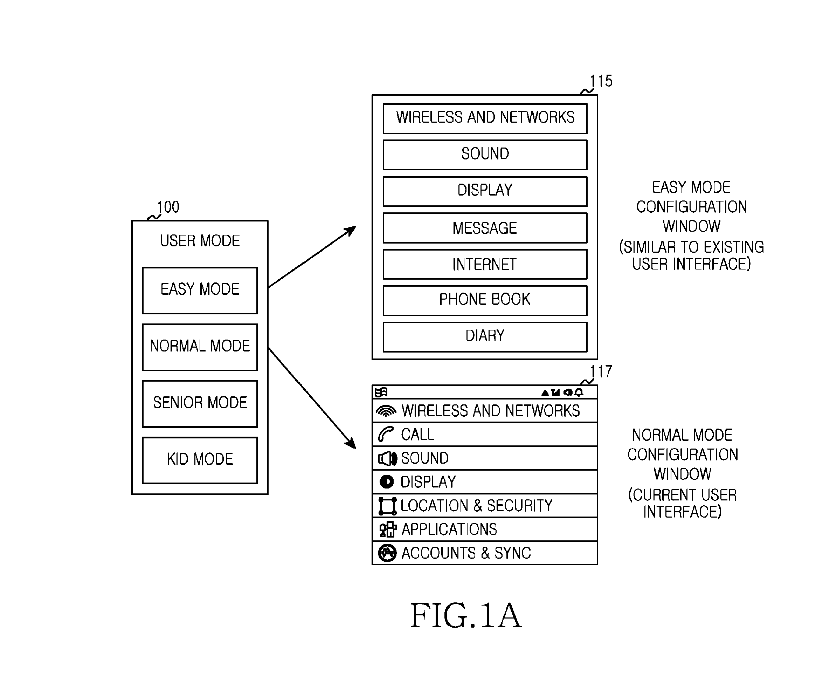

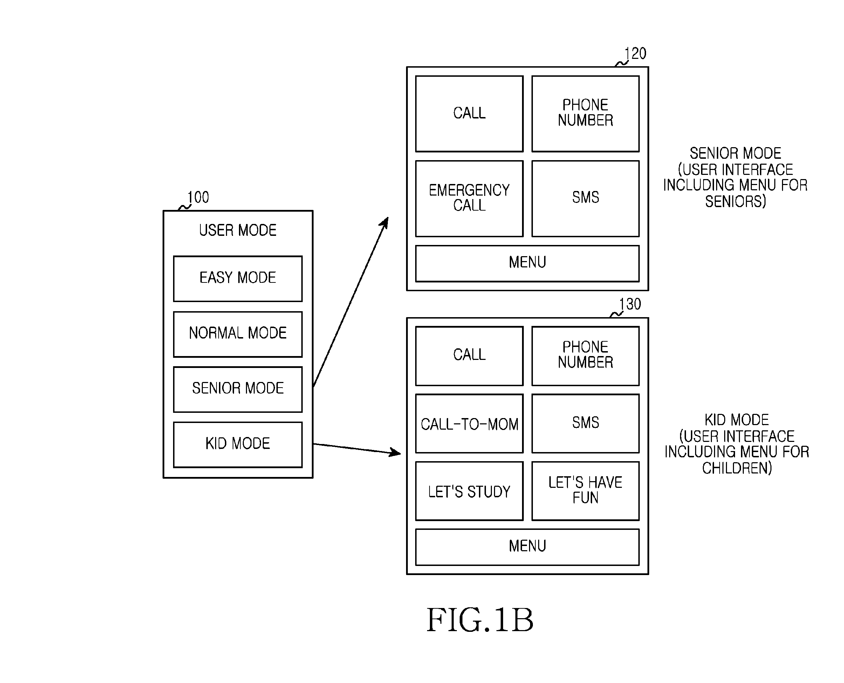

FIGURES 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged portable or mobile telephone and associated communications system. The following description with reference to the accompanying drawings is provided to assist in a comprehensive understanding of exemplary embodiments of the present disclosure as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the disclosure. In addition, descriptions of well-known functions and constructions may be omitted for clarity and conciseness.

The terms and words used in the following description and claims are not limited to the bibliographical meanings, but, are merely used to enable a clear and consistent understanding of the present disclosure. Accordingly, it should be apparent to those skilled in the art that the following description of exemplary embodiments of the present disclosure is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

The present disclosure relates to a method and an apparatus for allowing a user to set initial configuration of a user interface of a portable terminal for user convenience.

Exemplary embodiments of the present disclosure provide a method and an apparatus for generating a user-configurable user interface in a portable terminal. Herein, the portable phone embraces a smart phone.

FIGURES 1A and 1B are simplified diagrams of a user interface configuration screen according to an exemplary embodiment of the present disclosure.

Referring to FIGURES 1A and 1B, when a portable terminal is booted up, a screen requesting to configure a user mode 100 is displayed. For example, the user mode displays an easy mode, a normal mode, a senior mode, and a child mode. A user can select one of the user modes.

When the user selects one user mode, a user interface is selected using the selected user mode.

When the easy mode 115 is selected in the configuration screen of the user mode 100, functions such as Bluetooth connections, wireless Local Area Network (LAN) connections, and Global Positioning System (GPS) location services are turned on by default. Major functions such as sound and display are configured such that the user can directly access them in the corresponding mode. That is, all of the communication functions are turned on, and the user interface is configured such that the user can directly access the sound and display functions on the user interface.

When the normal mode 117 is selected in the configuration screen of the user mode 100, a normal menu generally used in the portable terminal is selected. That is, the user interface is set to a default user interface.

When the senior mode 120 is selected in the configuration screen of the user mode 100, menu items are displayed as big icons. In this case, programs for the senior, such as call, Short Messaging Service (SMS, also known as "text messaging"), and emergency call, are set first of all.

The user interface is configured such that the font and the icon of the menu are larger than the basic font and icon and the user can directly access a call function, an SMS function, and an emergency call function such as hospital call on the user interface

When the child mode 130 is selected in the configuration screen of the user mode 100, menu items are set to big icons and a menu for the child is set first.

That is, the user interface is configured such that the user can directly access call-to-mom, SMS, and urgent help ("SOS") call functions on the user interface.

In the senior mode 120 and the child mode 130, font size, color, and shape can be defined for easy identification.

Although it is not depicted in the drawings, when the user selects a use pattern mode, the user interface for the use pattern is set. The user interface configuration for the use pattern implies that menu items frequently used by the user are arranged first of all.

When the user selects and determines the mode, the portable terminal can be rebooted and then apply the configuration value.

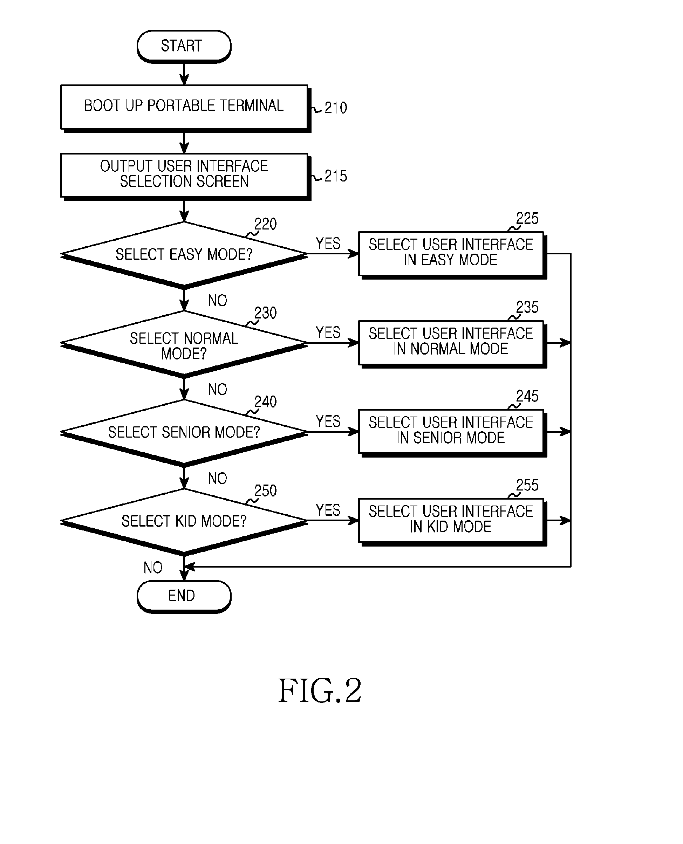

FIGURE 2 is a flowchart of a user interface configuration method of the portable terminal according to an exemplary embodiment of the present disclosure.

Referring to FIGURE 2, after the portable terminal is booted in step 210, the portable terminal outputs the user interface selection screen in step 215. The user interface selection screen 100 is shown in FIGURES 1A and 1B.

When the user selects the easy mode in step 220, the user interface is selected in the easy mode in step 225.

When the user selects the normal mode in step 230, the user interface is selected in the normal mode in step 235.

When the user selects the senior mode in step 240, the user interface is selected in the senior mode in step 245.

When the user selects the child mode in step 250, the user interface is selected in the child mode in step 255.

Although not explicitly depicted in the drawing, when the user selects the use pattern mode, the user interface for the use pattern is configured. The user interface configuration for the use pattern implies that the menu items frequently used by the user are arranged first.

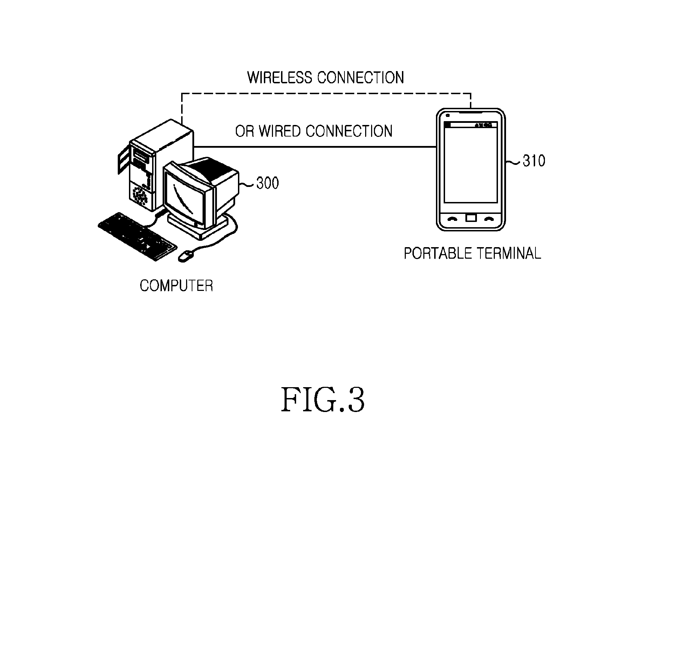

FIGURE 3 depicts the user interface configuration using a computer according to an exemplary embodiment of the present disclosure.

Referring to FIGURE 3, a computer 300 and a portable terminal 310 are connected by wire or by wireless. The wireless connection can adopt short-range wireless connection protocol such as Bluetooth and wireless LAN.

The computer 300 outputs the user interface selection screen 100 of FIGURE 1, and the user can select the user mode to use through the computer 300 and use the selected user mode as the user interface.

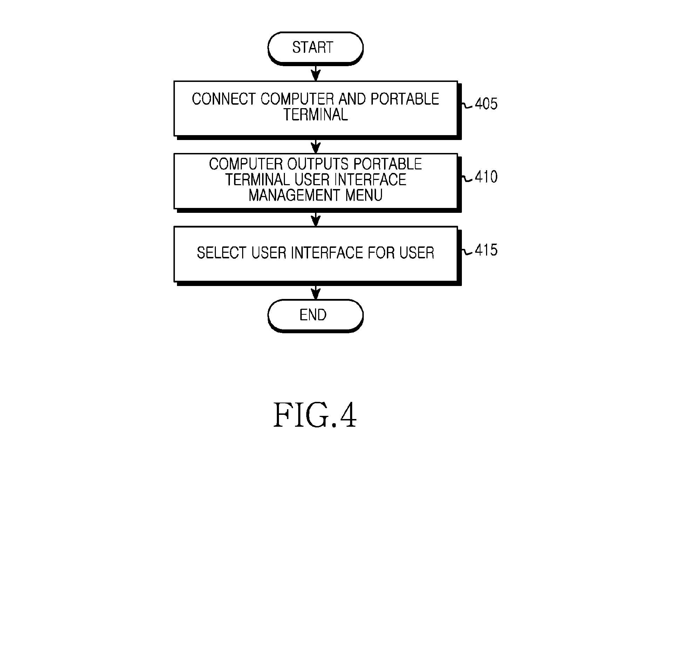

FIGURE 4 is a flowchart of operations of the computer in the user interface configuration using the computer according to an exemplary embodiment of the present disclosure.

Referring to FIGURE 4, when the computer and the portable terminal are connected in step 405, the computer outputs a portable terminal user interface management menu in step 410. The user interface management menu 100 is shown in FIGURES 1A and 1B.

The user selects the user interface by selecting the user mode to use in step 415.

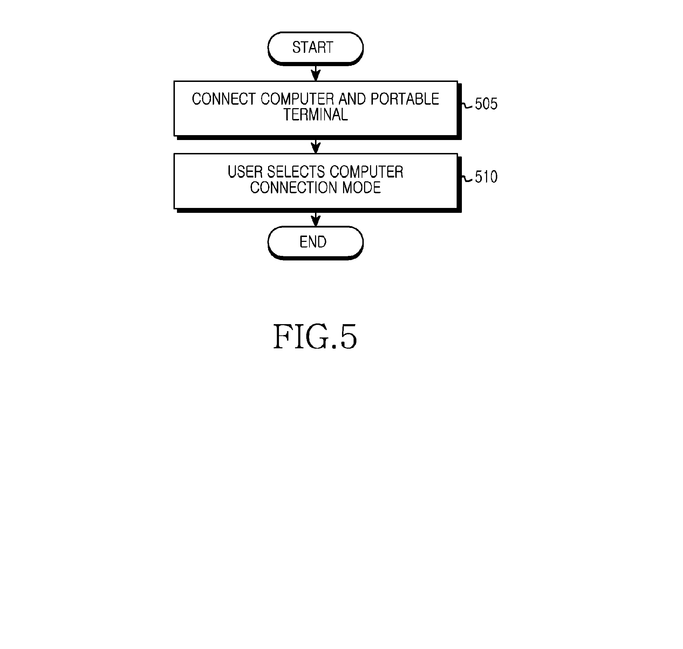

FIGURE 5 is a flowchart of operations of the portable terminal in the user interface configuration using the computer according to an exemplary embodiment of the present disclosure.

Referring to FIGURE 5, the computer and the portable terminal are connected in step 505. The portable terminal outputs a screen inquiring about a computer connection mode for connecting the portable terminal and the computer. Next, the portable terminal receives the computer connection mode from the user in step 510, and connects to the computer in the corresponding mode.

When the user selects the user mode through the computer, the selected user mode is transmitted to the portable terminal and configured as the user interface.

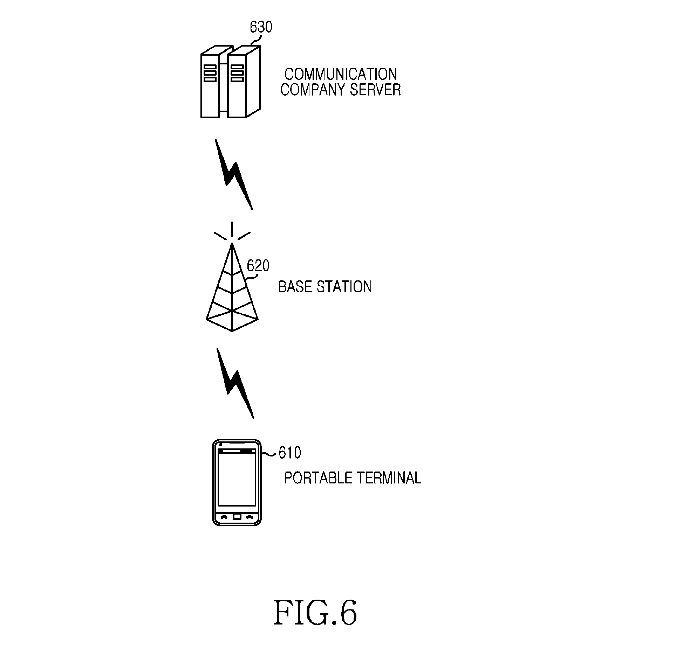

FIGURE 6 depicts user interface configuration using a communication company according to an exemplary embodiment of the present disclosure.

Referring to FIGURE 6, when a portable terminal 610 is booted, the portable terminal 610 commences location registration to a communication company server 630 through a base station 620.

Next, the user requests a user interface configuration value to use, to the communication company server 630 through the portable terminal 610.

In this case, the communication company server 630 sends the user interface configuration value for the user's age of the portable terminal 610, to the portable terminal 610.

Alternatively, the communication company server 630 sends the user interface configuration value for the use pattern of the portable terminal 610, to the portable terminal 610.

The use pattern can place the menu item frequently used by the user on the screen first of all.

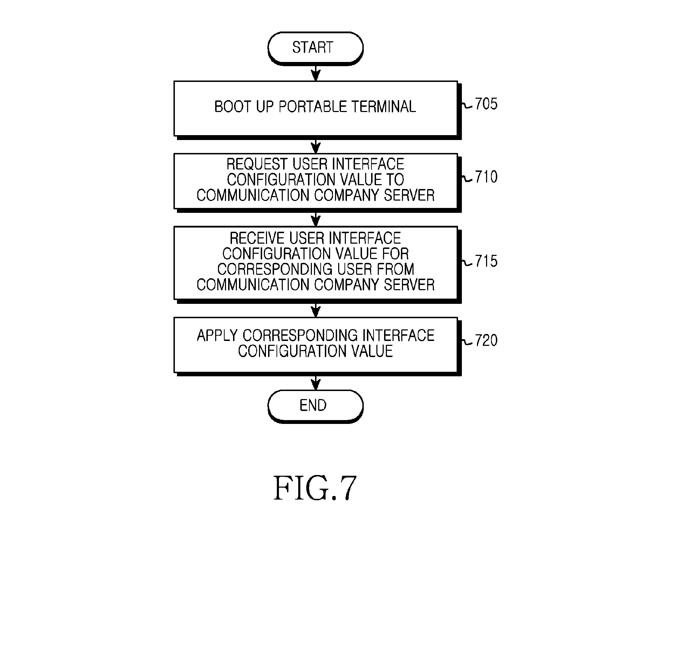

FIGURE 7 is a flowchart of operations of the portable terminal in the user interface configuration using the communication company according to an exemplary embodiment of the present disclosure.

Referring to FIGURE 7, after the boot-up in step 705, the portable terminal requests the user interface configuration value to the communication company server in step 710.

Next, the portable terminal receives the user interface configuration value of the corresponding user from the communication company server in step 715, and applies the corresponding user interface configuration value in step 720. That is, the portable terminal determines the user mode according to the received user interface configuration value, and sets the determined user mode to the user interface.

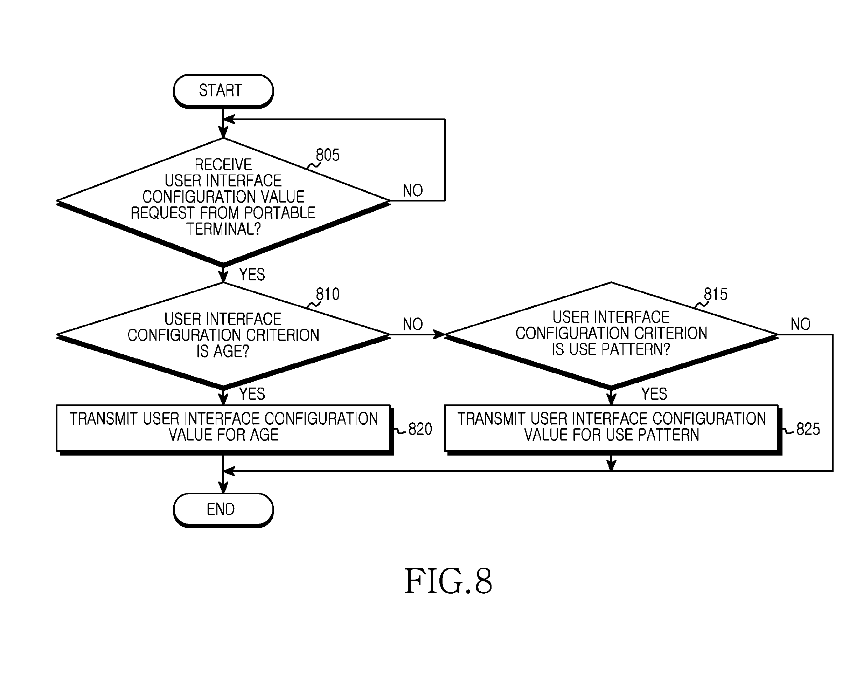

FIGURE 8 is a flowchart of operations of the communication service provider server in the user interface configuration using the communication service provider according to an exemplary embodiment of the present disclosure.

Referring to FIGURE 8, when receiving the user interface configuration value request from the portable terminal in step 805, the communication service provider server determines whether the user interface configuration criterion is the user age in step 810.

When the user interface configuration criterion is the user age, the communication service provider server transmits the user interface configuration value for the user age in step 820.

The user interface configuration for the user age implies that the user menu for the user's age is selected as the user interface.

For example, in FIGURES 1A and 1B, the user menu is selected in the child mode when the user is a youth, the user menu is selected in the normal mode when the user is an adult male, the user menu is selected in the easy mode when the user is an adult female, and the user menu is selected in the senior mode when the user is an elderly person.

When the user interface configuration criterion is the use pattern in step 815, the communication service provider server transmits the user interface configuration value for the use pattern in step 825.

The user interface configuration for the use pattern first arranges the menu item frequently used by the user.

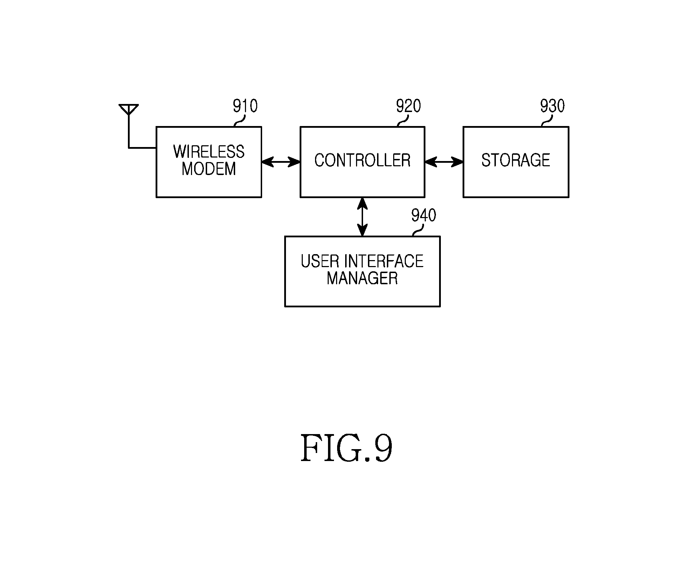

FIGURE 9 is a block diagram of the portable terminal according to an exemplary embodiment of the present disclosure.

Referring to FIGURE 9, the portable terminal includes a modem 910, a controller 920, a storage 930, and a user interface manager 940. Notably, the portable terminal further includes a display part (not shown) for displaying output data of the controller 920 and the user interface manager 940, and an input part (not shown) for receiving the input from the user and providing the input data to the controller 920 or the user interface manager 940.

The modem 910, which is a module for communicating with other device, includes a wireless processor and a baseband processor. The wireless processor converts a signal received via an antenna to a baseband signal and outputs the baseband signal to the baseband processor. The wireless processor converts a baseband signal output from the baseband processor to a radio signal transmittable in an actual wireless path and transmits the radio signal over the antenna.

The wireless communication protocol of the modem 910 can adopt all kinds of current wireless communication protocols.

The controller 920 controls the operations of the portable terminal. In particular, the controller 920 can control or include the user interface manager 940.

The storage 930 stores a program for controlling the operations of the portable terminal, and temporary data generating in the program execution.

After the portable terminal is booted up, the user interface manager 940 outputs the user interface selection screen. The user interface selection screen 100 is shown in FIGURES 1A and 1B.

When the user selects the easy mode, the user interface manager 940 selects the user interface in the easy mode.

When the user selects the normal mode, the user interface manager 940 selects the user interface in the normal mode.

When the user selects the senior mode, the user interface manager 940 selects the user interface in the senior mode.

When the user selects the child mode, the user interface manager 940 selects the user interface in the child mode.

When the user selects the use pattern mode, the user interface for the use pattern is configured. The user interface configuration for the use pattern first arranges the menu item frequently used by the user.

When the computer and the portable terminal are connected, the user interface manager 940 outputs the screen inquiring about the computer connection mode for connecting the portable terminal and the computer.

Next, the user interface manager 940 receives the computer connection mode selected by the user and connects to the computer in the corresponding mode.

When the user selects the user mode through the computer, the selected user mode is transmitted to the portable terminal and the user interface manager 940 sets the selected user mode to the user interface.

After the booting, the user interface manager 940 requests the user interface configuration value to the communication service provider server.

The user interface manager 940 receives the user interface configuration value of the corresponding user from the communication service provider server, and applies the corresponding user interface configuration value. That is, the user interface manager 940 determines the user mode according to the received user interface configuration value, and configures the user interface in the determined user mode.

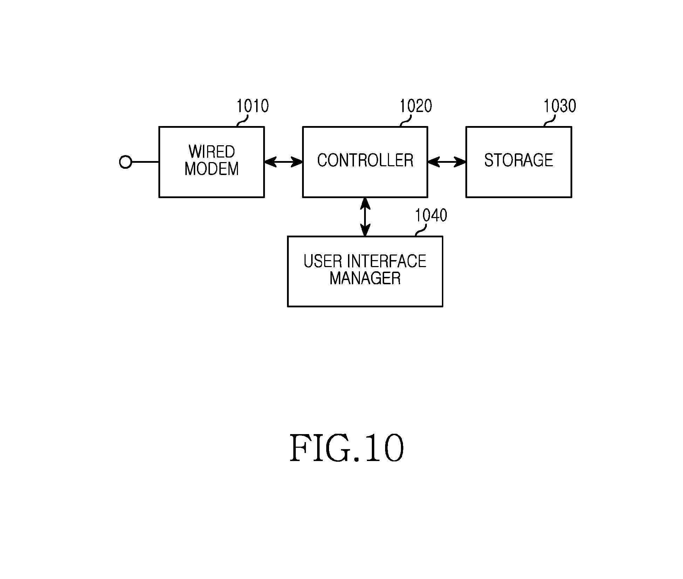

FIGURE 10 is a block diagram of the communication service provider server according to an exemplary embodiment of the present disclosure.

Referring to FIGURE 10, the communication service provider server includes a wired modem 1010, a controller 1020, a storage 1030, and a user interface manager 1040.

The wired modem 1010, which is a module for communicating with other device, includes a wire processor and a baseband processor. The wire processor converts a signal received by cable to a baseband signal and outputs the baseband signal to the baseband processor. The wire processor converts a baseband signal output from the baseband processor to a wire signal transmittable in the wired path and transmits the signal in the wired path.

The wired communication protocol of the wired modem 1010 can adopt all kinds of current wireless communication protocols.

The controller 1020 controls the operations of the communication service provider server. In particular, the controller 1020 can control or include the user interface manager 1040.

The storage 1030 stores a program for controlling the operations of the communication service provider server, and temporary data generating in the program execution.

When the user interface configuration value request is received from the portable terminal, the user interface manager 1040 determines whether the user interface configuration criterion is the user age.

When the user interface configuration criterion is the user age, the user interface manager 1040 transmits the user interface configuration value for the user age.

The user interface configuration for the user age implies that the user menu for the user's age is selected as the user interface.

For example, in FIGURES 1A and 1B, the user menu is selected in the child mode when the user is a youth, the user menu is selected in the normal mode when the user is an adult male, the user menu is selected in the easy mode when the user is an adult female, and the user menu is selected in the senior mode when the user is an elderly person.

When the user interface configuration criterion is the use pattern, the user interface manager 1040 transmits the user interface configuration value for the use pattern.

The user interface configuration for the use pattern implies that the menu items frequently used by the user are arranged first of all.

The present invention can provide the user convenience to the user having no special knowledge about the portable terminal or the silver generation, and generate the user interface for providing the protection function for the young children.

In addition, when the portable terminal is initially booted up, the user can select the user interface for his/her convenience.

When the portable terminal is initially booted up, the communication service provider server can select the user interface for the user's age to thus provide the convenience to the user.

While the subject matter of the present disclosure has been shown and described with reference to certain exemplary embodiments thereof, it will be understood by those skilled in the art that various changes in form and details may be made therein without departing from the spirit and scope of the disclosure as defined by the appended claims and their equivalents.

## Claims

1. A method for configuring a user interface in a portable terminal, the method comprising:
displaying selectable user modes;
receiving an indication of a selected user mode from a user; and
setting the user mode selected by the user to the user interface.

2. The method of claim 1, further comprising:
before displaying the selectable user modes, booting up the portable terminal.

3. The method of claim 1, wherein, when the user mode selected by the user is an easy mode, every communication function is turned on, and the user interface is configured such that the user is able to access sound and display related functions directly on the user interface.

4. The method of claim 1, wherein, when the user mode selected by the user is a normal mode, the user interface is set to a default user interface.

5. The method of claim 1, wherein, when the user mode selected by the user is a senior mode, the user interface is configured such that menu font and icon are greater than basic font and icon and the user is able to access call, Short Message Service (SMS), and hospital call functions directly on the user interface.

6. The method of claim 1, wherein, when the user mode selected by the user is a child mode, the user interface is configured such that menu font and icon are greater than basic font and icon and the user is able to access call-to-mom, SMS, and urgent help ("SOS") call functions directly on the user interface.

7. The method of claim 1, wherein, when the user mode selected by the user is a use pattern mode, the user interface is configured such that the user is able to access a function corresponding to a menu item frequently used by the user on the user interface first of all.

8. A method of a communication service provider server for configuring a user interface in a mobile communication system, the method comprising:
determining whether a user interface configuration value request is received from a portable terminal;
when receiving the user interface configuration value request, determining whether a user interface configuration criterion is an age; and
when the user interface configuration criterion is the age, determining and transmitting a user interface configuration value for the age of a user to the portable terminal.

9. The method of claim 8, further comprising:
when the user interface configuration criterion is a use pattern, determining and transmitting a user interface configuration value for the use pattern of a user to the portable terminal.

10. The method of claim 8, wherein the user interface configuration value for the age of the user results in selecting a user mode in a child mode when the user is a youth, selecting the user mode in a normal mode when the user is an adult male, selecting the user mode in an easy mode when the user is an adult female, selecting the user mode in a senior mode when the user is a senior, and setting the selected user menu to the user interface.

11. The method of claim 8, wherein, when the user interface configuration criterion is the use pattern, the user interface is configured such that the user is able to access a function corresponding to a menu item frequently used by the user on the user interface first of all.

12. An apparatus of a portable terminal for configuring a user interface to perform all or part of the method of any one of claims 1 to 7.

13. An apparatus of a a communication service provider server for configuring a user interface in a mobile communication system to perform all or part of the method of any one of claims 8 to 11.
